# EUROPEAN PATENT APPLICATION

(11) **EP 3 552 965 A1**
(43) Date of publication of application: **16.10.2019**
(21) Application number: 18195990.9
(22) Date of filing: 21.09.2018
(51) Int. Cl.: B64D 11/06

(54) **SEAT ASSEMBLY FOR VEHICLES**

(30) Priority: 09.04.2018 IT 201800002320 U
(71) Applicant: Aviointeriors S.p.A., 80133 Napoli (NA) (IT)
(72) Inventor: VENERUSO, Alberto, 80133 Napoli (NA) (IT)
(74) Representative: Santi, Filippo

(57) **Abstract**

The invention relates to a seat assembly (1a, 1b, 1c) of the type which can be installed on board a vehicle in which are defined a floor (P) and a ceiling (S), said seat assembly (1a, 1b, 1c) comprising: a backrest (2); a seat (3) comprising two side portions (3a, 3c) and an intermediate portion (3b) positioned between said side portions (3a, 3c), wherein said intermediate portion (3b) protrudes, forwards, with respect to said side portions (3a, 3c) to allow a person to sit on the seat (3) in a substantially upright position; and a support structure (4). The support structure (4) comprising in turn: at least two uprights (13, 14) to which are connected said backrest (2) and said seat (3); first connection means (17, 19, 20) for connecting, in use, said at least two uprights (13, 14) to said floor (P); and second connection means (32, 33, 34) for connecting, in use, said at least two uprights (13, 14) to said celling (S), in such a way as to distribute, in use, the load of said seat assemblies (1a, 1b, 1c), partly on said floor (P) and partly on said ceiling (S). The invention also relates to a set of seat assemblies (1) of the type which can be installed on board a vehicle in which are defined a floor (P) and a ceiling (S), and also a vehicle comprising at least one seat assembly (1a, 1b, 1c) of the above-mentioned type.

## Description

The invention relates to a seat assembly for vehicles.

More in detail, the invention relates to a seat assembly designed to be mounted inside vehicles where the installation of a large number of seat assemblies is required is required in relation to the space available for the relative installation.

The above-mentioned seat assembly is particularly suitable for being mounted on board aircraft, even though they can be installed, advantageously, also inside trains, buses, ships or other types of vehicles.

As can be easily imagined, in these cases it is necessary to reduce to a minimum the overall size of the seat assemblies and the relative support structures to allow the installation of the greatest possible number of seat assemblies, at the same time guaranteeing an adequate comfort for the passengers.

There are aircraft which have a high density of seat assemblies inside the relative fuselage.

In these prior art aircraft the seat assemblies have, however, support structures which are quite bulky to allow the stable fixing to the floor of the fuselage.

This results, inevitably, in a significant reduction in the space available for the passengers and, consequently, also a reduction in the possibility for the passengers seated in the seat assemblies to move their legs and feet.

The description below relates to seat assemblies installed on board an aircraft, but it is quite apparent how the same should not be considered limited to this specific use, as the seat assemblies can also be installed inside other types of vehicles.

In light of the above, the aim of the invention is therefore to provide a seat assembly for vehicles which has an adequate comfort for the passenger and allows, at the same time, a high density of seat assemblies to be obtained inside the vehicles.

Another aim of the invention is to provide a seat assembly for vehicles which allows a better distribution of the loads to be achieved inside the vehicles in which it is installed.

A further aim of the invention is to provide a seat assembly which is relatively easy to install inside vehicles.

The specific object of this invention is therefore a seat assembly of the type which can be installed on board a vehicle in which are defined a floor and a ceiling, said seat assembly comprising: a backrest; a seat comprising two side portions and an intermediate portion positioned between said side portions, wherein said intermediate portion protrudes, forwards, with respect to said side portions to allow a person to sit on the seat in a substantially upright position; and a support structure comprising: at least two uprights to which are connected said backrest and said seat; first connection means for connecting, in use, said at least two uprights to said floor; and second connection means for connecting, in use, said at least two uprights to said ceiling, in such a way as to distribute, in use, the load of said seat assemblies, partly on said floor and partly on said ceiling.

Further, according to the invention, said seat may be shaped, substantially, in the form of a bicycle saddle.

Preferably, according to the invention, said second connection means comprise a reticular structure connected to a top portion of said at least two uprights.

Advantageously, according to the invention, said reticular structure can comprise a plurality of devices for absorbing vibrations in different directions.

Again according to the invention, said second connection means can comprise at least two connection elements for connecting, in an articulated fashion, said at least two uprights to said reticular structure.

Preferably, according to the invention, said seat assembly comprises an adjustment mechanism for adjusting the height of said seat.

Further, according to the intention, said seat assembly may comprise at least two armrests positioned at opposite sides of said backrest and a respective adjustment mechanism for adjusting the height of said at least two armrests.

Again according to the invention, said first connection means can comprise at least two connection elements for connecting, in use, said at least two uprights to said floor in an articulated fashion.

Preferably, according to the invention, said seat assembly comprises a transversal element connected to said at least two uprights and positioned beneath said seat in such a way that between said transversal element and said at least two uprights is defined a space for housing, in use, at least one bag.

The object of this invention is also a series of seat assemblies of the type which can be installed on board a vehicle in which are defined a floor and a ceiling, said series of seat assemblies comprising: a plurality of backrests; a plurality of seats positioned aligned with each other, each seat comprising two side portions and an intermediate portion positioned between said side portions, wherein said intermediate portion protrudes, forwards, with respect to said side portions to allow a person to sit on the seat in a substantially upright position; and a support structure comprising: at least two uprights to which are connected said plurality of backrests and said plurality of seats; first connection means for connecting, in use, said at least two uprights to said floor; and second connection means for connecting, in use, said at least two uprights to said ceiling, in such a way as to distribute, in use, the load of said series of seat assemblies, partly on said floor and partly on said ceiling.

Another object of the invention is a vehicle comprising a fuselage, in which are defined a floor and a ceiling, and at least one seat assembly of the type describe above, connected to said floor and to said ceiling.

This invention will now be described, by way of example and without limiting its scope, with reference to the accompanying drawings which illustrate a preferred embodiment of it, in which:

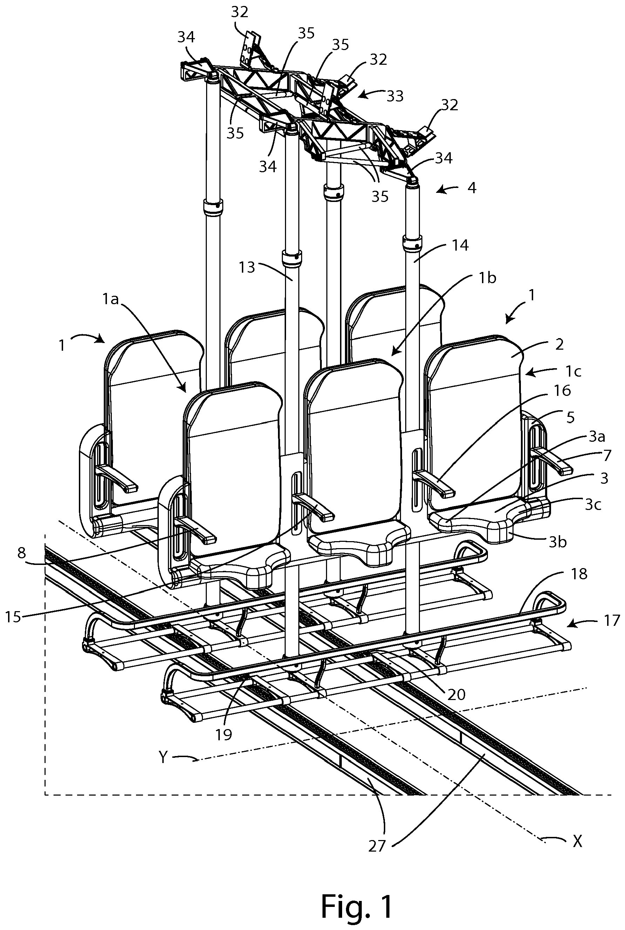

Figure 1 is an axonometric view of two adjacent groups of seat assemblies in accordance with the invention installed on the fuselage of a vehicle;

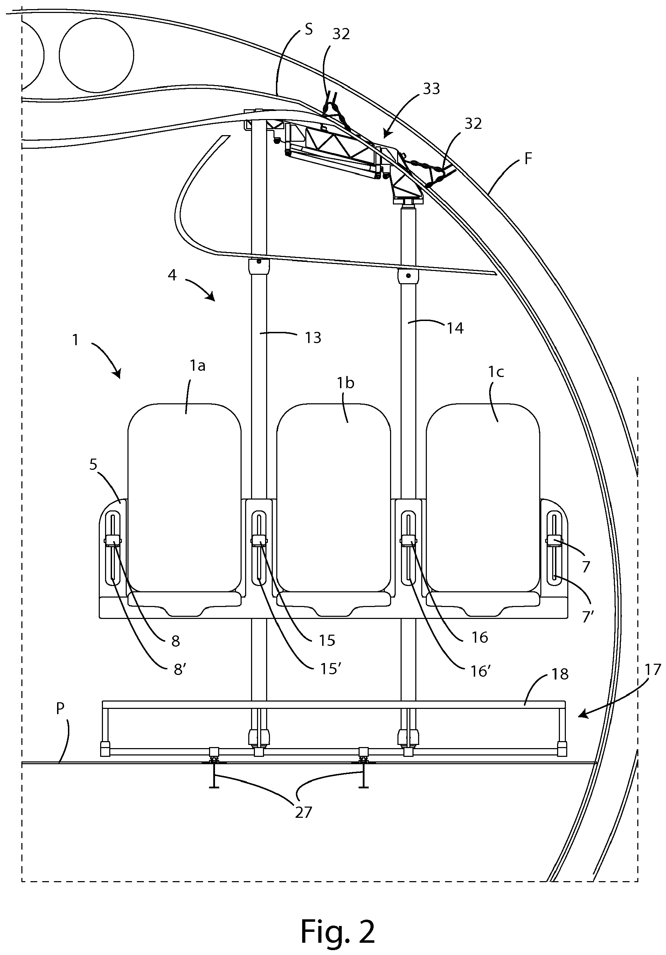

Figure 2 is a front view of a group of seat assemblies according to the invention, in which a part of the fuselage and a part of the relative floor are also shown;

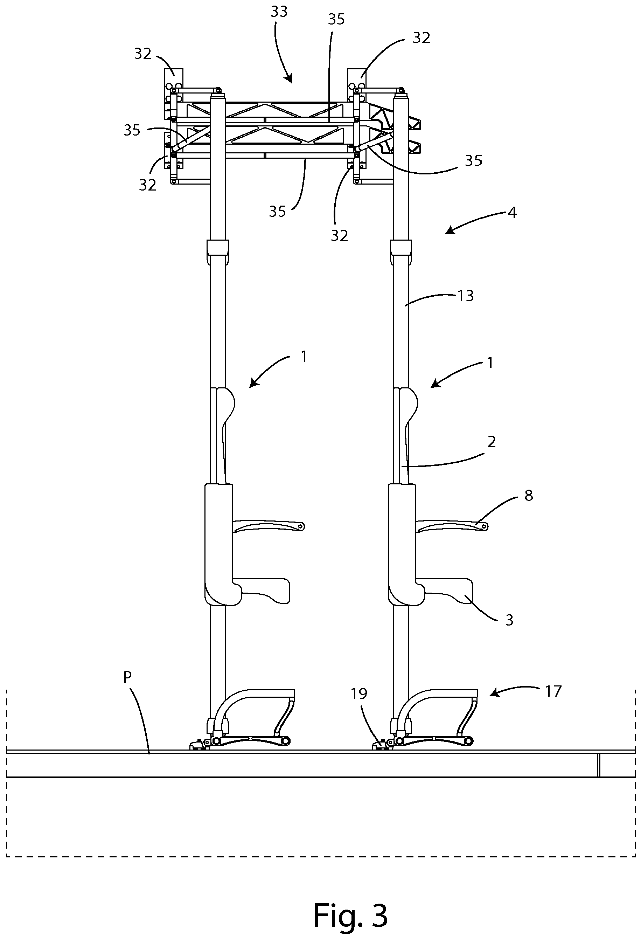

Figure 3 is a side view showing two adjacent groups of seat assemblies according to the invention position on the floor of the fuselage;

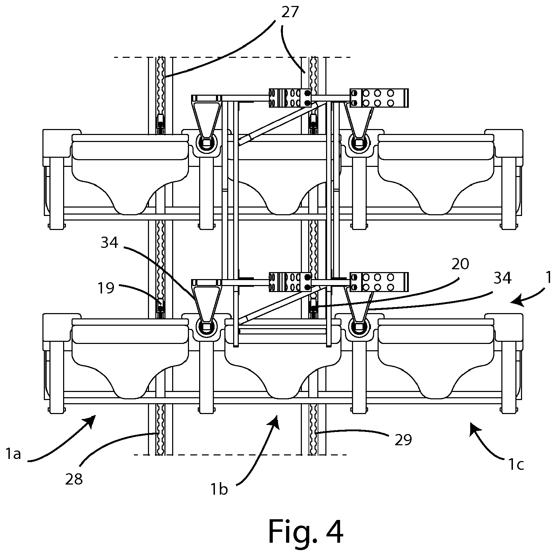

Figure 4 is a plan view from above of two groups of seat assemblies shown in Figure 1;

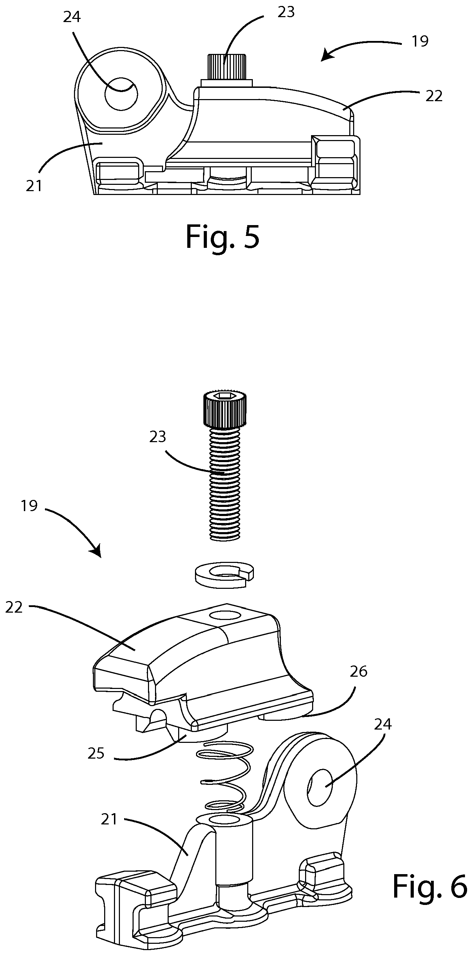

Figure 5 is a side view of an element for fixing to the floor each group of seat assemblies shown in Figures 1 to 4;
Figure 6 is a perspective view of the fixing element illustrated in Figure 5;
Figure 7 is a partial plan view from above of a further element for allowing the anchoring to the ground of each group of seat assemblies shown in Figures 1 to 4; and
Figure 8 is a cross section view through the line A-A of Figure 7.

In the various figures similar parts are labelled with the same reference numerals.

With reference to the accompanying drawings, the numeral 1 denotes a group of seat assemblies formed, in this specific case, by three seat assemblies, in particular a central seat assembly 1b and two side seat assemblies 1a, 1c positioned aligned with the central seat assembly 1b.

According to further embodiments, the above-mentioned group of seat assemblies could, however, also be composed of a different number of seat assemblies, more or less than three and, therefore, also by a single seat assembly.

More specifically, each seat assembly 1a, 1b, 1c comprises a backrest 2 and a seat 3 configured in the form of a bicycle saddle, that is, with a respective central front part 3b protruding with respect to the two side portions 3a, 3c.

This particular shape of the seat 3 allows the passengers to sit on the seats in a more upright position compared with traditional seat assemblies, which are, on the other hand, normally configured so as to allow sitting with the femoral section of the legs parallel to the floor.

The shape of the seat 3 of the seat assemblies 1a, 1b, 1c therefore allows the overall dimensions determined by the passengers in a seated position to be reduced and to therefore increase the number of seat assemblies which can be installed per unit length along the longitudinal axis X of the fuselage F.

The group of seat assemblies 1 is supported by a support structure 4 which comprises a transversal frame 5, on which are mounted the seat assemblies 1a, 1b, 1c by means of a respective adjustment mechanism (not visible) which allows the height of each seat assembly 1a, 1b, 1c to be varied in an independent fashion.

On the transversal frame 5 are also mounted the two inner armrests 15, 16 and the two outer armrests 7, 8 of the group of seat assemblies 1, with a respective adjustment mechanism 15', 16', 7', 8' for allowing the variation in height of each armrest.

The support structure 4 also comprises two vertical uprights 13, 14 to which the transversal frame 5 is rigidly connected, at the opposite sides of the central seat assembly 1b, that is, between the central seat assembly 1b and the side seat assembly 1a, and between the central seat assembly 1b and the other side seat assembly 1c.

The support structure 4 also comprises a lower framework 17 fixed at the base of each vertical upright 13, 14.

In the upper part of the lower framework 17 there is a transversal tubular element 18 protruding forwards and having the function of containing any hand luggage for the passengers, which should be placed in the space beneath the seats 3, between the transversal tubular element 18 and the vertical uprights 13, 14.

The transversal tubular element 18 therefore prevents the hand luggage placed in the above-mentioned space from moving forwards along the longitudinal axis X during the various flight phases, in particular during landing when the aircraft is subjected to a sharp deceleration.

For the anchoring of the support structure 4 to the floor P of the fuselage F there are two lower fixing elements 19, 20, also called "feet".

More specifically, each lower fixing element 19, 20 comprises a lower body 21 and an upper body 22 which can be connected by means of a screw 23 to the lower body 21.

On the front side of the lower body 21 of each lower fixing element 19, 20 there is a through hole 24 for making, with the above-mentioned lower framework 17, a connection rotatable about a transversal axis Y at right-angles to the above-mentioned longitudinal axis X by means of a respective pin position through the through hole 24.

On the bottom of the upper body 22 of each lower fixing element 19, 20 there are also two protruding portions 25, 26 configured for the fixing to the floor P as described below.

Beneath the group of seat assemblies 1, and also at the groups of seat assemblies positioned in front of and behind the group of seat assemblies 1, there is, fixed, a track 27, that is to say, a pair of "seat tracks", which extends parallel to the longitudinal axis X in the floor P of the fuselage F.

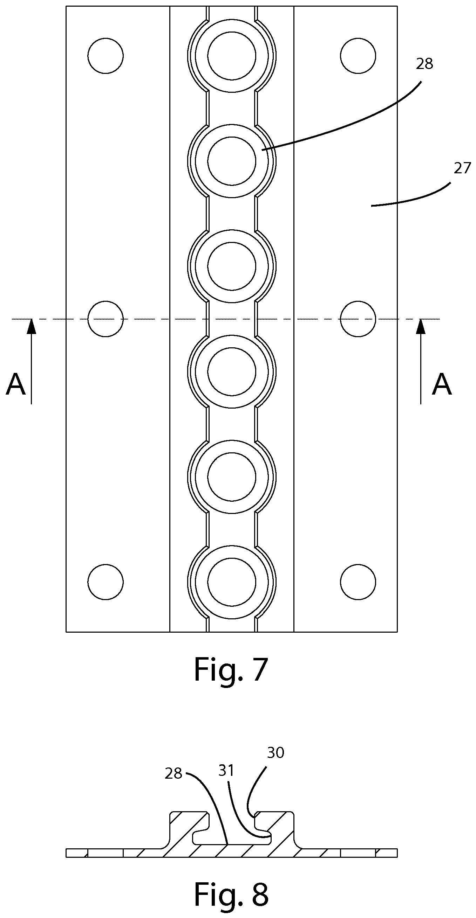

On the top surfaces of the track 27 there are a first row of cavities 28 and a second row of cavities 29, wherein each cavity has an upper, narrow, portion 30 and a lower, wide, portion 31 (see Figure 8) configured for receiving, under pressure, together with the lower portion 31 of an adjacent cavity, the two protruding portions 25, 26 of the upper body 22 of each lower fixing element 19, 20, by screwing the above-mentioned screw 23.

In this way, the lower framework 17 is connected to the track 27, and therefore also indirectly also to the floor P of the fuselage F, only at the two lower fixing elements 19, 20.

On the ceiling S, that is, on the top part of the fuselage F, above each longitudinal row of the group of seat assemblies 1, a reticular structure 33, which extends parallel to the above-mentioned longitudinal axis X, is fixed by means of anchoring elements 32.

There is also a plurality of upper connecting elements 34 to allow the connection between the reticular structure 33 and the top portions of the vertical uprights 13, 14 of each group of seat assemblies 1.

In particular, each upper connecting element 34 is in the form of a substantially triangular element hinged to the reticular structure 33 and to one of the above-mentioned vertical uprights 13, 14, in such a way as to allow, in the hinge areas, a slight rotation about a respective axis parallel to the above-mentioned transversal axis Y, allowing the two vertical uprights 13, 14 to perform small movements in a substantially vertical direction.

In the reticular structure 33 there are also a plurality of devices 35 for absorbing vibrations in different directions.

As may be seen from the above description, the particular shape of the seat assemblies 1a, 1b, 1c and of the relative support structure 4 allows the installation, on board the aircraft, of a high number of seat assemblies per unit length, in terms of the linear dimension along the longitudinal axis X.

At the same time, the technical solution described above allows the load of the seat assemblies to be distributed partly on the floor and partly on the upper cover of the fuselage of the aircraft.

The distribution of the loads is particularly advantageous if a large number of seat assemblies is to be installed on the aircraft per unit length along the longitudinal axis X.

In fact, the fixing of a large number of seat assemblies to the floor could result in an excessive load on the latter, with possible problems of instability of the seat assemblies and damage to the relative support structure.

The seat assemblies described above can also be conveniently installed on board vehicles other than aircraft, such as, for example trains, buses or ships, allowing advantages to be obtained, equally, in terms of high density of seat assemblies which can be located in the installation compartment and adequate comfort for the passengers.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A seat assembly (1a, 1b, 1c) of the type which can be installed on board a vehicle in which are defined a floor (P) and a ceiling (S), said seat assembly (1a, 1b, 1c) comprising:
a backrest (2);
a seat (3) comprising two side portions (3a, 3c) and an intermediate portion (3b) positioned between said side portions (3a, 3c), wherein said intermediate portion (3b) protrudes, forwards, with respect to said side portions (3a, 3c) to allow a person to sit on the seat (3) in a substantially upright position; and
a support structure (4) comprising:
at least two uprights (13, 14) to which are connected said backrest (2) and said seat (3);
first connection means (17, 19, 20) for connecting, in use, said at least two uprights (13, 14) to the floor (P); and
second connection means (32, 33, 34) for connecting, in use, said at least two uprights (13, 14) to said celling (S), in such a way as to distribute, in use, the load of said seat assemblies (1a, 1b, 1c), partly on said floor (P) and partly on said ceiling (S).

2. The seat assembly (1a, 1b, 1c) according to claim 1, **characterised in that** said seat (3) is shaped, substantially, in the form of a bicycle saddle.

3. The seat assembly (1a, 1b, 1c) according to claim 1 or 2, **characterised in that** said second connection means comprise a reticular structure (33) connected to a top portion of said at least two uprights (13, 14).

4. The seat assembly (1a, 1b, 1c) according to claim 3, **characterised in that** said reticular structure (33) comprises a plurality of devices (35) for absorbing vibrations in different directions.

5. The seat assembly (1a, 1b, 1c) according to claim 3 or 4, **characterised in that** said second connection means comprise at least two connection elements (34) for connecting, in an articulated fashion, said at least two uprights (13, 14) to said reticular structure (33).

6. The seat assembly (1a, 1b, 1c) according to any one of the preceding claims, **characterised in that** it comprises an adjustment mechanism for adjusting the height of said seat (3).

7. The seat assembly (1a, 1b, 1c) according to any one of the preceding claims, **characterised in that** it comprises at least two armrests (7, 16) positioned at opposite sides of said backrest (2) and a respective adjustment mechanism for adjusting the height of said at least two armrests (7, 16).

8. The seat assembly (1a, 1b, 1c) according to any one of the preceding claims, **characterised in that** said first connection means comprise at least two connection elements (19, 20) for connecting, in use, said at least two uprights (13, 14) to the floor (P) in an articulated fashion.

9. The seat assembly (1a, 1b, 1c) according to any one of the preceding claims, **characterised in that** it comprises a transversal element (18) connected to said at least two uprights (13, 14) and positioned beneath said seat (3) in such a way that between said transversal element (18) and said at least two uprights (13, 14) is defined a space for housing, in use, at least one bag.

10. A set of seat assemblies (1) of the type which can be installed on board a vehicle in which are defined a floor (P) and a ceiling (S), said set of seat assemblies (1) comprising:
a plurality of backrests (2);
a plurality of seats (3) positioned aligned with each other, each seat (3) comprising two side portions (3a, 3c) and an intermediate portion (3b) positioned between said side portions (3a, 3c), wherein said intermediate portion (3b) protrudes, forwards, with respect to said side portions (3a, 3c) to allow a person to sit on the seat (3) in a substantially upright position; and
a support structure (4) comprising:
at least two uprights (13, 14) to which are connected said plurality of backrests (2) and said plurality of seats (3);
first connection means (17, 19, 20) for connecting, in use, said at least two uprights (13, 14) to the floor (P); and
second connection means (32, 33, 34) for connecting, in use, said at least two uprights (13, 14) to said celling (S), in such a way as to distribute, in use, the load of said set of seat assemblies (1), partly on said floor (P) and partly on said ceiling (S).

11. A vehicle comprising a fuselage (F), in which are defined a floor (P) and a ceiling (S), and at least one seat assembly (1a, 1b, 1c) according to any one of claims 1 to 9 connected to said floor (P) and to said ceiling (S).
